# FASCICULE DE BREVET EUROPEEN

(11) **EP 3 661 221 B1**
(45) Date de publication et mention de la délivrance du brevet: **06.11.2024**
(21) Numéro de dépôt: 19211240.7
(22) Date de dépôt: 25.11.2019
(51) Int. Cl.: H04N 21/422, H04N 21/436

(54) **PROCÉDÉ DE SUIVI D'UNE ÉMISSION AUDIOVISUELLE ET ÉQUIPEMENT PERMETTANT SA MISE EN OEUVRE**
VERFAHREN ZUR ÜBERWACHUNG EINES AUDIOVISUELLEN RUNDFUNKS UND AUSRÜSTUNG ZU DESSEN DURCHFÜHRUNG
METHOD FOR MONITORING AN AUDIOVISUAL BROADCAST AND EQUIPMENT FOR ITS IMPLEMENTATION

(30) Priorité: 30.11.2018 FR 1872165
(43) Date de publication de la demande: 03.06.2020
(73) Titulaire: Sagemcom Broadband SAS, 92270 Bois-Colombes (FR)
(72) Inventeur: SEBIRE, Julien, 92500 Rueil Malmaison (FR)
(74) Mandataire: Cabinet Le Guen Maillet

(56) Documents cités:
- EP-A1- 3 018 845
- WO-A1-2016/180914
- US-A1- 2014 330 951
- US-A1- 2015 215 382

## Description

### DOMAINE TECHNIQUE

La présente invention concerne un procédé de suivi d'une émission audiovisuelle sur les différents équipements de diffusion d'un local. L'invention concerne également l'équipement de diffusion et le système d'équipements de diffusion permettant de mettre en oeuvre ce procédé.

L'invention trouve des applications dans le domaine de la réception télévisuelle et, en particulier, dans le domaine de la réception des programmes télévisés sur plusieurs appareils.

### ETAT DE LA TECHNIQUE

Il est connu, dans le domaine de la diffusion audiovisuelle, que les téléviseurs sont de plus en plus présents dans les intérieurs des particuliers et même des professionnels. La plupart des habitats comportent plusieurs téléviseurs dispersés dans les différentes pièces de l'habitat. Par exemple, dans un appartement de plusieurs pièces, il est fréquent qu'un premier téléviseur soit installé dans le séjour, un deuxième téléviseur dans une chambre à coucher et qu'un troisième voire un quatrième téléviseur soit installé dans une autre chambre à coucher ou même la cuisine. Chaque téléviseur est associé à un décodeur qui assure le décryptage et/ou la décompression du programme télévisé diffusé par le distributeur de programmes audiovisuels - ou opérateur TV - et l'affichage du programme télévisé décrypté/décompressé sur le téléviseur associé.

Les décodeurs sont indépendants les uns des autres de sorte que chaque téléviseur peut afficher un programme télévisé différent des programmes télévisés affichés sur les autres téléviseurs. Cependant, une conséquence de l'indépendance des décodeurs d'un même habitat est que l'utilisateur qui passe d'une première pièce à une deuxième pièce de l'habitat, par exemple du séjour à la chambre à coucher, doit, dans chacune des pièces, allumer le décodeur s'il n'est pas déjà en fonctionnement, puis rechercher le programme télévisé souhaité et programmer ses choix de visualisation (par exemple, le niveau sonore, la langue, etc.).

Actuellement, une méthode connue pour suivre un programme télévisé - ou émission audiovisuelle - d'une première pièce de l'habitat à une deuxième pièce consiste à allumer le décodeur de la deuxième pièce et à y enregistrer l'émission en cours, lorsque les décodeurs proposent une solution dite « multi-room ».

Lorsque l'émission audiovisuelle existe sur le cloud, c'est-à-dire qu'elle a été enregistrée au format NPVR (Network Personnal Vidéo recorder, en termes anglo-saxons) sur un réseau dématérialisé, alors l'utilisateur n'a pas besoin d'enregistrer au préalable d'émission audiovisuelle ; il peut simplement revenir manuellement en arrière pour reprendre l'émission audiovisuelle à l'endroit où elle en était lorsqu'il a quitté la première pièce.

Une méthode et un système, décrits dans le document US 2010017474 A1, permettent une reprise en arrière d'une émission audiovisuelle visualisée par plusieurs utilisateurs. Cependant, ce système et cette méthode nécessite une intervention manuelle des utilisateurs. Ils ne permettent pas une reprise en arrière automatique de l'émission.

Le document US 20090216351 A1 décrit un système et un procédé permettant d'étendre les capacités d'une architecture de réseau UPnP AV avec une fonctionnalité de suivi fournissant aux utilisateurs la possibilité de suspendre ou d'arrêter la lecture de l'émission audiovisuelle à un emplacement du réseau UPnP AV puis de reprendre la lecture de cette émission ultérieurement. Cependant, ce système et cette méthode nécessitent des interventions manuelles de la part des utilisateurs.

US 2015/215382 A1 divulgue un système pour détecter un dispositif personnel mobile lisant un contenu multimédia et pour transmettre automatiquement la présentation de ce contenu multimédia vers un autre dispositif multimédia (téléviseur, dispositif stéréo, dispositif de jeux vidéo). US 2014/330951 A1 divulgue un procédé et un système pour séparer et distribuer le contenu multimédia et les éléments d'information d'état associés pendant des sessions de streaming actives du serveur hôte dans un système de réseau domestique.

### RESUME DE L'INVENTION

Pour répondre au problème évoqué ci-dessus du suivi d'une émission audiovisuelle à travers les pièces de l'habitat, le demandeur propose un procédé automatique de suivi d'une émission audiovisuelle dans lequel une temporisation de l'émission audiovisuelle est lancée dès qu'un déplacement d'un dispositif connecté associé à l'utilisateur est détecté.

Selon un premier aspect, l'invention concerne un procédé de suivi d'une émission audiovisuelle entre au moins un premier et un deuxième équipements de diffusion connectés par l'intermédiaire d'un routeur et aptes chacun à diffuser au moins partiellement l'émission audiovisuelle, caractérisé en ce chacun des équipements de diffusion comporte un processeur de calculs, une mémoire et au moins une interface de suivi d'un dispositif connecté associé à un utilisateur et en ce que le procédé comporte les opérations suivantes :
- détection, par le premier équipement de diffusion, de l'éloignement du dispositif connecté par rapport audit premier équipement de diffusion,
- envoi, par le premier équipement de diffusion, d'un message d'éloignement (300) à destination de tous les équipements de diffusion connectés au routeur, ce message d'éloignement comportant une donnée de temporisation de l'émission audiovisuelle,
- vérification, par chacun des équipements de diffusion connectés au routeur, de l'approche du dispositif connecté,
- détection, par le deuxième équipement de diffusion, de l'approche du dispositif connecté associé à l'utilisateur,
- diffusion de l'émission audiovisuelle, par le deuxième équipement de diffusion, en fonction de la donnée de temporisation transmise par le premier équipement de diffusion dans le message d'éloignement, et
- émission, par le deuxième équipement de diffusion, d'un message d'acquittement à destination de tous les équipements de diffusion.

Le procédé de l'invention permet à un utilisateur de poursuivre de façon automatique la visualisation et/ou l'écoute d'une émission audiovisuelle sur les différents équipements de diffusion d'un local.

De façon avantageuse, le procédé comporte une opération préliminaire de reconnaissance du dispositif connecté associé à l'utilisateur et de transmission, aux équipements de diffusion connectés au routeur, d'un message de suivi contenant des données de suivi dudit dispositif connecté.

Outre les caractéristiques mentionnées ci-dessus, le procédé selon l'invention peut présenter une ou plusieurs caractéristiques complémentaires parmi les suivantes, considérées individuellement ou selon les combinaisons techniquement possibles :
- chaque message de suivi comporte, dans une trame de message, une adresse MAC relative au dispositif connecté, une valeur de seuil proche, une valeur de seuil éloigné et un identifiant d'utilisateur.
- chaque message d'éloignement comporte, dans une trame de message, un identifiant de l'équipement de diffusion émettant le message d'éloignement, l'adresse MAC du dispositif connecté, une information de relance de l'émission audiovisuelle et la donnée de temporisation.
- l'opération préliminaire de reconnaissance du dispositif connecté comporte au moins une mesure, au moins par le premier équipement de diffusion, d'un indicateur de puissance de signal reçu.
- l'opération préliminaire de reconnaissance du dispositif connecté comporte un échantillonnage de l'indicateur de puissance de signal reçu.
- l'opération préliminaire de reconnaissance du dispositif connecté comporte une sélection du dispositif connecté, par l'utilisateur.
- le procédé comporte, après réception du message d'acquittement, et en l'absence d'un deuxième dispositif connecté détecté à proximité du premier équipement de diffusion, une opération d'arrêt de la diffusion par le premier équipement de diffusion.
- le dispositif connecté communique avec les équipements de diffusion par un protocole d'échange sans fil Bluetooth.
- lorsque le dispositif connecté est détecté à l'approche du deuxième équipement de diffusion, ledit deuxième équipement de diffusion envoie à l'utilisateur une demande d'acceptation de reprise de l'émission audiovisuelle.

Selon un deuxième aspect, l'invention concerne un équipement de diffusion d'une émission audiovisuelle, caractérisé en ce qu'il comporte un processeur de calculs, une mémoire et au moins une interface de suivi d'un dispositif connecté associé à un utilisateur, ledit équipement de diffusion étant apte à détecter un éloignement et une approche du dispositif connecté, à envoyer, recevoir et traiter un message d'éloignement, et à diffuser l'émission audiovisuelle en tenant compte d'une donnée de temporisation contenue dans le message d'éloignement.

Selon un troisième aspect, l'invention concerne un système de diffusion d'une émission audiovisuelle mettant en oeuvre le procédé tel que défini ci-dessus et caractérisé en ce qu'il comporte :
- au moins un premier et un deuxième équipements de diffusion connectés par l'intermédiaire d'un routeur, et
- au moins un dispositif connecté, associé à un utilisateur et connecté aux équipements de diffusion par un protocole d'échange sans fil,
   chacun des premier et deuxième équipements de diffusion comportant un processeur de calculs, une mémoire et au moins une interface de suivi du dispositif connecté.

Ce système présente l'avantage de ne nécessiter aucun dispositif supplémentaire, plus ou moins couteux. Ce système est constitué uniquement d'équipements (équipements de diffusion, dispositif connecté, routeur) présents dans un habitat classique qui, dans l'invention, ont la particularité d'échanger des informations entre eux.

Selon un quatrième aspect, l'invention concerne un programme d'ordinateur, caractérisé en ce qu'il comprend des instructions qui, lorsqu'elles sont exécutées par un équipement de diffusion d'une émission audiovisuelle, sont propres à mettre en oeuvre le procédé tel que défini ci-dessus pour détecter le dispositif connecté et diffuser l'émission audiovisuelle.

Selon un cinquième aspect, l'invention concerne un moyen de stockage, caractérisé en ce qu'il stocke un programme d'ordinateur comprenant des instructions pour mettre en oeuvre, par un équipement de diffusion d'une émission audiovisuelle, le procédé tel que défini ci-dessus lorsque le programme est exécuté par un processeur dudit équipement.

### BREVE DESCRIPTION DES FIGURES

D'autres avantages et caractéristiques de l'invention apparaîtront à la lecture de la description, illustrée par les figures dans lesquelles :
La figure 1 représente schématiquement un exemple d'un plan d'appartement dans lequel des équipements de diffusion sont installés dans des pièces différentes ;
La figure 2 représente une vue schématique d'un exemple de système de diffusion automatique d'une émission audiovisuelle selon l'invention ;
La figure 3 représente un exemple de diagramme fonctionnel du procédé selon certains modes de réalisation de l'invention ; et
La figure 4 et la figure 5 représentent des exemples de trames, respectivement, d'un message de suivi et d'un message d'éloignement.

### DESCRIPTION DETAILLEE D'AU MOINS UN MODE DE REALISATION

Un exemple de réalisation d'un procédé automatique de suivi d'une émission audiovisuelle et du système mettant en oeuvre ce procédé est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

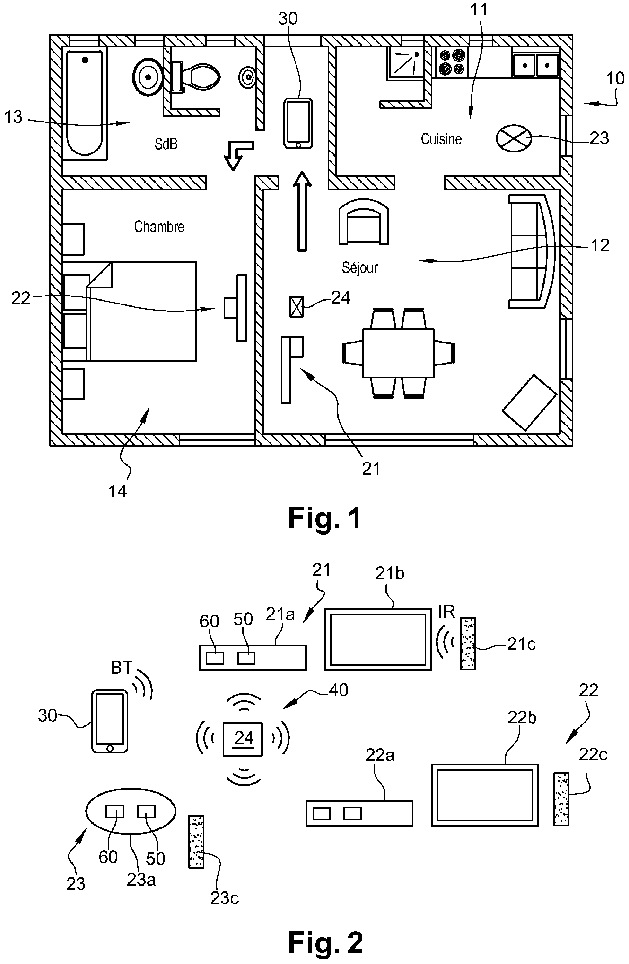

[Fig 1] La figure 1 représente un exemple d'un plan d'appartement dans lequel trois équipements de diffusion sont installés dans trois pièces différentes. L'homme du métier comprendra que le procédé et les équipements qui seront décrits par la suite peuvent être mis en oeuvre dans toutes sortes d'habitats ou de locaux, que ce soit des habitats individuels, des habitats collectifs, des locaux commerciaux, etc. Dans l'exemple de la figure 1, l'appartement 10 comporte une cuisine 11, un séjour 12, une salle de bains 13 et une chambre à coucher 14. Dans cet appartement 10, un premier équipement de diffusion 21 est installé dans le séjour 12 et un deuxième équipement de diffusion 22 est installé dans la chambre à coucher 14, ces premiers et deuxièmes équipements de diffusion étant chacun, par exemple, un ensemble décodeur/téléviseur. Un troisième équipement de diffusion 23 est installé dans la cuisine 11, ce troisième équipement de diffusion 23 étant, par exemple, une enceinte intelligente. En effet, selon l'invention, un équipement de diffusion peut être tout type de dispositif ou ensemble de dispositifs permettant de diffuser entièrement ou partiellement une émission audiovisuelle. Autrement dit, un équipement de diffusion peut être un dispositif ou un ensemble de dispositifs permettant de diffuser le son et l'image d'une émission audiovisuelle, ou bien uniquement le son, ou encore uniquement l'image. L'équipement de diffusion peut donc être, par exemple, un ensemble décodeur/téléviseur, une enceinte intelligente (smart speaker, en termes anglo-saxons), un téléphone mobile, ou tout autre dispositif électronique capable de diffuser une émission visuelle et/ou une émission audio.

Dans l'exemple d'appartement de la figure 1, chaque équipement de diffusion 21, 22, 23 est indépendant du ou des autres équipements de diffusion dudit habitat ou local, ce qui offre à chaque équipement la possibilité d'afficher une émission audiovisuelle spécifique, différente de l'émission audiovisuelle affichée sur les autres équipements. Toutefois, chaque équipement de diffusion (appelé plus simplement équipement) est connecté aux autres équipements par l'intermédiaire d'un routeur assurant le routage de paquets dans le réseau informatique de l'habitat. Ce routeur peut être, par exemple, le routeur Wifi de l'habitat. Dans l'exemple de la figure 1, le routeur 24 est localisé dans le séjour 12, étant entendu qu'il peut être positionné dans n'importe quel endroit de l'habitat et qu'il peut être indépendant ou intégré à un dispositif informatique de l'habitat.

L'ensemble des équipements de diffusion 21, 22, 23 de l'habitat forment, avec le routeur 24, le système de diffusion de l'invention. Ce système de diffusion comporte, en outre, au moins un dispositif connecté 30 associé à un utilisateur. En effet, de nos jours, la majorité des personnes gardent sur eux, ou à portée de main, un dispositif connecté tel qu'une montre connectée ou un téléphone portable. Le système de l'invention propose de détecter les déplacements, dans l'habitat, de certains au moins des dispositifs connectés et de considérer que chaque dispositif connecté se déplace avec son utilisateur. En suivant le déplacement du dispositif connecté, le système de diffusion suit le déplacement de l'utilisateur et permet une poursuite automatique de la diffusion de l'émission audiovisuelle sur les différents équipements du système, de sorte que l'utilisateur ne manque pas une partie de l'émission audiovisuelle.

[Fig 2] La figure 2 représente un exemple de système de diffusion selon l'invention. Cet exemple correspond au système de diffusion installé dans l'appartement 10 de la figure 1. Dans cet exemple, le système de diffusion comporte donc un premier ensemble décodeur/téléviseur 21 formant le premier équipement du système, un deuxième ensemble décodeur/téléviseur 22 formant le deuxième équipement et une enceinte intelligente 23 formant le troisième équipement du système de diffusion. Chaque ensemble décodeur/téléviseur 21, 22 peut comporter un décodeur 21a, 22a, un téléviseur 21b, 22b et une télécommande 21c, 22c, le décodeur étant équipé d'une interface de sortie audio-vidéo, par exemple de type HDMI, connectée au téléviseur.

Chaque équipement 21, 22, 23 comporte plusieurs entrées de signaux numériques, comme par exemple des entrées Ethernet, Câble, Satellite, antenne TNT et Wifi. Chaque équipement 21, 22, 23 comporte aussi un processeur de calculs et une mémoire pour mettre en oeuvre le procédé de l'invention. Chaque équipement comporte en outre une première interface 50, par exemple une interface Bluetooth, pour mettre en oeuvre le suivi du dispositif connecté et, dans certaines variantes, gérer les actions utilisateurs via la télécommande. Dans certaines autres variantes, chaque équipement 21, 22, 23 peut comporter également une deuxième interface 60, par exemple Infra-rouge (IR), pour gérer les actions utilisateurs, par exemple via la télécommande 21c, 22c, 23c.

Le système de diffusion de la figure 2 comporte en outre un routeur 24 connecté par tout moyen de communication connu aux différents équipements de diffusion 21, 22, 23 du système. Dans l'exemple de la figure 2, le routeur 24 communique avec les équipements de diffusion par Wifi (schématisé par la référence 40). Ce routeur 24 permet à tous les équipements de communiquer entre eux et de partager les évènements et les flux de données audio/vidéo.

Le système de diffusion de la figure 2 comporte également au moins un dispositif connecté 30, associé à un utilisateur, et communiquant avec les équipements de diffusion par un protocole de communication tel que le Bluetooth (schématisé par la référence BT sur la figure 2). Le système peut comporter autant de dispositifs connectés que d'utilisateurs du système, chaque dispositif connecté devant au préalable avoir été sélectionné par l'utilisateur et reconnu par le système de diffusion, de la façon décrite ultérieurement. Le dispositif connecté peut être un téléphone portable, une montre connectée ou tout autre dispositif connecté associé spécifiquement à un utilisateur.

Ce système de diffusion permet à l'utilisateur muni de son dispositif connecté de continuer la visualisation et/ou l'écoute d'une émission audiovisuelle lorsqu'il se déplace dans son habitat. Par exemple, lorsque l'utilisateur, qui regarde une émission audiovisuelle sur un premier équipement de diffusion, par exemple l'ensemble décodeur/téléviseur 21 du séjour 12, s'éloigne, muni de son dispositif connecté 30, dudit premier équipement et sort du séjour, ledit équipement de diffusion 21 détecte son éloignement. Il informe alors les autres équipements 22, 23 de l'habitat 10 que l'utilisateur s'est éloigné et qu'il va certainement se rapprocher d'un autre équipement de diffusion de l'habitat. Chaque équipement 21, 22, 23 de l'habitat vérifie alors si l'utilisateur, muni de son dispositif connecté 30, s'approche dudit équipement. Si l'utilisateur est détecté, via son dispositif connecté, comme approchant du deuxième équipement de diffusion, alors ledit deuxième équipement met en route la diffusion de l'émission audiovisuelle. Dans l'exemple de la figure 1, si le dispositif connecté 30 est détecté comme approchant de l'équipement 22, alors l'ensemble décodeur/téléviseur 22 commence la diffusion audiovisuelle de l'émission audiovisuelle à l'endroit où ladite émission audiovisuelle était lorsque l'utilisateur s'est éloigné de l'ensemble décodeur/téléviseur 21 du séjour. Si le dispositif connecté 30 est détecté comme approchant de l'équipement 23 de la cuisine, alors l'enceinte intelligente 23 commence la diffusion audio de l'émission audiovisuelle à l'endroit où ladite émission audiovisuelle était lorsque l'utilisateur s'est éloigné de l'ensemble décodeur/téléviseur 21 du séjour.

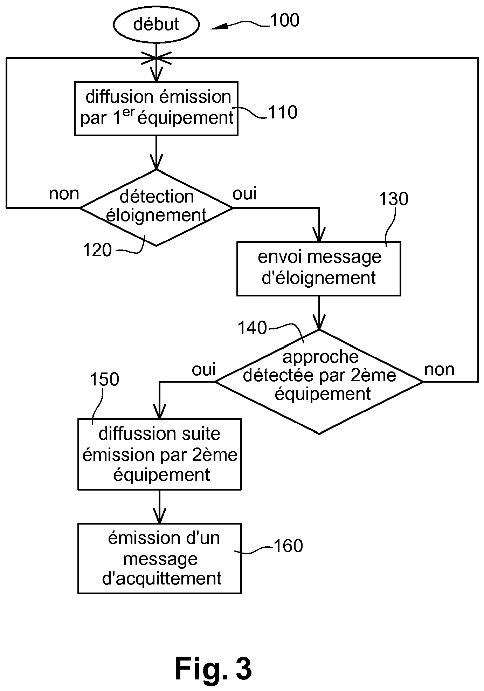

[Fig 3] Un exemple d'un procédé selon l'invention est représenté sous la forme d'un diagramme fonctionnel sur la figure 3. Ce procédé 100 comporte, lors d'une étape 110, la diffusion d'une émission audiovisuelle par un premier équipement. Il comporte également une étape 120 de détection de l'éloignement du dispositif connecté par rapport au premier équipement. Cette étape 120 consiste en ce que le premier équipement détermine si le signal qu'il reçoit du dispositif connecté est supérieur ou inférieur à une valeur seuil, appelée seuil de proximité. En effet, si le signal que reçoit le premier équipement est inférieur à ce seuil de proximité, cela signifie que le dispositif connecté s'éloigne dudit premier équipement. Si ce n'est pas le cas - c'est-à-dire que le dispositif connecté est détecté à proximité du premier équipement - alors la diffusion de l'émission par le premier équipement se poursuit. Si c'est le cas - ce qui signifie que le dispositif connecté est détecté comme s'éloignant du premier équipement - alors ledit premier équipement envoie, via le routeur, un message d'éloignement à tous les équipements du système de diffusion (étape 130). Les équipements vérifient alors si le dispositif connecté est à l'approche de l'un d'eux. Lorsque, à l'étape 140, le dispositif connecté est détecté à proximité d'un des équipements, appelé ici deuxième équipement, alors ledit deuxième équipement commence la diffusion de la suite de l'émission audiovisuelle (étape 150). Si aucun équipement ne détecte l'approche du dispositif connecté, alors l'émission audiovisuelle continue à être diffusée sur le premier équipement. Lorsque le deuxième équipement a commencé la diffusion de l'émission audiovisuelle (étape 150), alors le deuxième équipement émet un message d'acquittement (160) à destination de tous les équipements du système de diffusion. Ce message d'acquittement peut, par exemple, contenir l'identifiant du deuxième équipement de diffusion ainsi que l'identifiant utilisateur et être transmis au moyen d'un protocole d'échange similaire au protocole décrit par la suite pour l'envoi du message d'éloignement. Selon les modes de réalisation et le paramétrage du système de diffusion, la diffusion par le premier équipement peut être interrompue automatiquement, à moins que la présence d'un autre dispositif connecté n'ait été détectée à proximité du premier équipement. En effet, le procédé de l'invention peut prévoir d'éteindre automatiquement un équipement de diffusion, lorsque la diffusion a été reprise par un autre équipement. Il peut également prévoir de demander à l'utilisateur, par un message d'acquittement, si la diffusion sur le premier équipement doit être interrompue. En variante, le procédé de l'invention peut prévoir d'éteindre le premier équipement de diffusion, lorsque la diffusion a été reprise par le deuxième équipement et uniquement si aucun autre dispositif connecté n'est détecté à proximité dudit premier équipement. Ces différents modes de réalisation et variantes peuvent être paramétrables, comme décrit ultérieurement.

Le procédé 100 peut comporter, avant l'étape 110, une opération préliminaire de reconnaissance du dispositif connecté. Cette opération de reconnaissance comporte tout d'abord une sélection du dispositif connecté par l'utilisateur. En effet, lors de l'installation du système de diffusion, chaque dispositif connecté des utilisateurs du système est préalablement détecté au moins par le premier équipement. Chaque utilisateur doit alors sélectionner, à partir d'un menu affiché sur ledit premier équipement, le dispositif connecté auquel il est associé.

Une fois le dispositif connecté sélectionné, des informations de proximité et/ou d'éloignement doivent être identifiées. Pour cela, plusieurs technologies peuvent être utilisées comme, par exemple, la technologie NFC (Near Field Communication, en termes anglo-saxons), la technologie des balises Beacon, le Wifi positionning, et Bluetooth, etc. Dans la présente description, l'identification des informations de proximité et/ou d'éloignement est réalisée au moyen de la technologie Bluetooth. Certaines technologies permettent une localisation précise du dispositif connecté. Si la technologie Bluetooth est facile à mettre en oeuvre, elle ne permet cependant pas une localisation très précise du dispositif connecté. L'opération préliminaire de reconnaissance peut alors comporter une phase d'apprentissage, au cours de laquelle au moins le premier équipement va apprendre des valeurs de seuil proche et de seuil éloigné du dispositif connecté.

Dans l'exemple où le premier équipement est un ensemble décodeur/téléviseur, un menu affiché sur le téléviseur permet d'afficher la liste des dispositif connectés prévus pour permettre l'identification de l'utilisateur. L'utilisateur est invité à s'installer devant son écran et à sélectionner le dispositif connecté qu'il souhaite utiliser pour permettre de mettre en oeuvre le procédé de suivi, par exemple un smart phone dont le Bluetooth est activé. Après cette sélection, le décodeur mesure la puissance du signal Bluetooth qu'il reçoit du smart phone et mémorise ce dispositif connecté et cette puissance comme référence pour l'utilisateur.

La mesure de la puissance en réception du signal, dans la technologie Bluetooth, utilise la valeur RSSI (Received Signal Strength Indicator, en termes anglo-saxons), échantillonnée sur un laps de temps court de quelques secondes (par exemple 5 secondes) qui permet de filtrer le bruit inhérent à la réception d'un signal radio. Le signal sur le dispositif connecté sélectionné est mesuré pendant ce laps de temps et mémorisé comme valeur seuil.

Une valeur de seuil proche est mesurée, par exemple lorsque l'utilisateur est installé devant son téléviseur. Une valeur de seuil éloigné est mesurée lorsque, sur invitation du système de configuration, l'utilisateur se sera éloigné du téléviseur pendant une période de quelques secondes (par exemple 10 secondes). Un dernier déplacement de l'utilisateur près du téléviseur permet de finaliser l'identification. La mesure du signal est alors enregistrée et devient la référence pour l'évènement d'activation du suivi de l'émission audiovisuelle sur les divers équipements du système de diffusion.

Chaque nouvel utilisateur souhaitant s'enregistrer devra identifier son dispositif connecté de la façon décrite ci-dessus.

L'homme du métier comprendra que la valeur RSSI est une valeur liée principalement aux drivers de la puce Bluetooth et n'est pas standardisée. La phase d'apprentissage permet de détecter les valeurs de seuil propres à chaque dispositif connecté. L'utilisation du SNR (Signal to noise Ratio, en termes anglo-saxons) est une autre technique possible pour mesurer la puissance en réception du signal du dispositif connecté, si cette valeur est disponible par la puce Bluetooth.

Une fois le dispositif connecté sélectionné et ses valeurs de seuil mesurées, ces données sont transmises à tous les équipements du système de diffusion par envoi d'un message de suivi. Ce message de suivi qui comporte les données nécessaires au suivi du dispositif connecté à travers l'habitat est transmis par le premier équipement à tous les équipements du système de diffusion afin que chacun de ces équipements puisse détecter le dispositif connecté à l'approche.

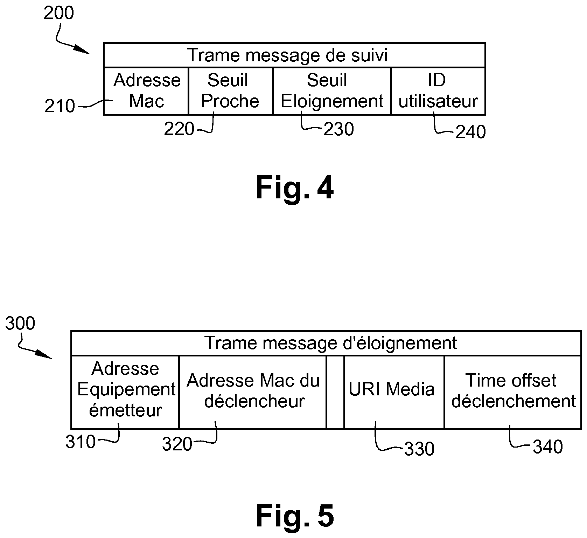

[Fig 4] Un exemple de message de suivi est représenté schématiquement sur la figure 4. Ce message de suivi 200 comporte, au sein d'une même trame de message, l'adresse MAC 210 du dispositif connecté, sa valeur de seuil proche 220 telle que mesurée, sa valeur de seuil éloigné 230 telle que mesurée et un identifiant utilisateur. L'identifiant utilisateur permet à chaque utilisateur de retrouver facilement son dispositif connecté dans la liste, lors de la sélection. L'adresse MAC a l'avantage d'être une adresse spécifique à chaque dispositif connecté, ce qui permet d'associer, à chaque dispositif connecté, ses propres valeurs de seuil proche et éloigné.

Dans une variante, on mesure les valeurs de seuil proche et éloigné pour un seul dispositif connecté et on attribue ces valeurs par défaut à chaque nouveau dispositif connecté. Cette variante, bien que moins précise, permet une installation rapide des nouveaux dispositif connectés.

Dans une autre variante, on cherche, au contraire, à affiner la détection de proximité et d'éloignement des dispositifs connectés. Pour cela, la phase d'apprentissage telle que définie ci-dessus est mise en oeuvre par chaque équipement de diffusion, ce qui permet d'obtenir une détection précise, adaptée à la taille de chaque pièce de l'habitat.

[Fig 5] Dès que l'opération de reconnaissance est terminée, le système de diffusion est opérationnel et tout utilisateur peut suivre automatiquement une émission audiovisuelle d'une pièce à l'autre de l'habitat. Le suivi du dispositif connecté à travers l'habitat est obtenu, comme expliqué précédemment, en détectant l'éloignement et/ou la proximité du dispositif connecté. De façon plus précise, lorsque le dispositif connecté s'éloigne d'un équipement de diffusion, celui-ci émet un message d'éloignement à destination des autres équipements de diffusion pour qu'ils vérifient si le dispositif connecté s'approche de l'un d'entre eux. Un exemple d'un message d'éloignement est représenté sur la figure 5. Ce message d'éloignement 300 comprend, dans une même trame de message, un identifiant 310 de l'équipement de diffusion émettant le message d'éloignement, l'adresse MAC 320 du dispositif connecté, une information 330 de relance de l'émission audiovisuelle et une donnée de temporisation 340. L'identifiant 310 de l'équipement de diffusion est un identifiant de l'équipement ayant émis l'information d'éloignement. Il peut être utilisé, notamment, pour afficher sur le deuxième équipement que le contenu de l'émission audiovisuelle est celui qui était diffusé par le premier équipement. L'adresse MAC 320 du dispositif connecté permet de rattacher au dispositif connecté, l'identifiant utilisateur qui a généré l'évènement. L'information de relance de l'émission audiovisuelle 330, nommée « URI Media » (Uniform Ressource Identifier Media, en termes anglo-saxons) sur la figure 5, est l'information permettant de relancer la lecture du contenu de l'émission audiovisuelle, par exemple un lien HLS M3U8, qui permet au deuxième équipement de savoir de quelle source provient le contenu de l'émission audiovisuelle, par exemple une source Multicast, HLS, Netflix, TNT, SAT, etc. La donnée de temporisation 340, nommée « Time Offset déclenchement » sur la figure 5, est l'information de décalage temporel permettant de revenir, dans le contenu de l'émission audiovisuelle, au moment où l'éloignement du dispositif connecté a été détecté de sorte que l'utilisateur ne perd pas de contenu de l'émission audiovisuelle.

Le message d'éloignement peut être envoyé, par l'équipement ayant détecté l'éloignement du dispositif connecté, par tout type de protocole réseau standard comme, par exemple, par WebSocket, UPnP ou tout autre protocole réseau connu de l'homme du métier.

Ainsi, dans l'exemple de l'appartement de la figure 1, si l'utilisateur, qui regarde une émission audiovisuelle dans son salon, se déplace pour se rendre dans la cuisine, alors le contenu de l'émission audiovisuelle diffusée sur le téléviseur 21 du salon se poursuit jusqu'à l'entrée de l'utilisateur dans la cuisine. À cet instant, l'enceinte intelligente 23 de la cuisine diffuse le son de l'émission audiovisuelle. Lorsque l'utilisateur revient dans son salon, le son s'arrête dans la cuisine. Si, toujours dans l'exemple de l'appartement de la figure 1, l'utilisateur se déplace de son salon, à sa chambre à coucher, l'ensemble décodeur/téléviseur 22 de la chambre à coucher détecte l'approche de l'utilisateur et diffuse l'émission audiovisuelle à partir du moment où l'évènement d'éloignement avait été émis.

Dans certains modes de réalisation, le procédé de l'invention peut comporter une opération de paramétrage de certaines variables. En effet, le menu affiché sur l'équipement de diffusion lors de l'installation du système de diffusion peut proposer de paramétrer certaines variables comme, par exemple, un créneau horaire pendant lequel le suivi automatique de l'émission audiovisuelle est autorisé. Il peut proposer également de sélectionner les équipements autorisés à mettre en oeuvre le suivi automatique des émissions audiovisuelles et de définir la gestion de ces équipements notamment l'allumage et l'extinction des équipements. Il peut proposer également, systématiquement ou dans certains créneaux horaires, de demander l'accord de l'utilisateur pour le suivi d'une émission audiovisuelle. Il peut proposer également de définir une hiérarchie des dispositif connectés des utilisateurs, les dispositifs connectés des parents pouvant, par exemple, être prioritaires sur ceux des enfants. Il peut proposer en outre de définir les conditions pour éteindre et/ou allumer un équipement de diffusion. L'homme du métier comprendra que ces propositions de paramétrages ne sont que des exemples et que d'autres paramétrages peuvent être envisagés en fonction, notamment, du local considéré, des utilisateurs, des équipements de diffusion, etc.

Dans d'autres modes de réalisation, le suivi de l'émission audiovisuelle peut être réalisé au moyen du dispositif connecté de l'utilisateur, par exemple lorsque ledit dispositif connecté est un smart phone ou une tablette. En effet, si dans les modes de réalisation précédemment décrits le dispositif connecté a uniquement un rôle de déclencheur (par la détection de son éloignement), il peut également constituer un des équipements de diffusion du système. En effet, une application dédiée peut être téléchargée dans le dispositif connecté pour lui permettre de diffuser l'émission audiovisuelle. Dans ces modes de réalisation, le dispositif connecté sert à la fois à la détection de l'éloignement de l'utilisateur, comme décrit précédemment, et à la diffusion de l'émission audiovisuelle, comme tout autre équipement du système de diffusion, ce qui permet de continuer la visualisation d'une émission audiovisuelle durant le déplacement ou lorsque l'utilisateur est hors de portée d'un équipement de diffusion. Dans ces modes de réalisation, les informations reçues par le dispositif connecté sont les mêmes que la trame envoyée par l'équipement émetteur du message d'éloignement, mais sera traité par l'application de l'opérateur installé sur le dispositif connecté qui sera seul en mesure de les interpréter pour diffuser le contenu.

Bien que décrit à travers un certain nombre d'exemples, variantes et modes de réalisation, le procédé de suivi et le système de diffusion selon l'invention comprennent divers variantes, modifications et perfectionnements qui apparaîtront de façon évidente à l'homme du métier, étant entendu que ces variantes, modifications et perfectionnements font partie de la portée de l'invention.

## Revendications

1. Procédé de suivi d'une émission audiovisuelle entre au moins un premier et un deuxième équipements de diffusion (21, 22, 23) connectés par l'intermédiaire d'un routeur (24) et aptes chacun à diffuser au moins partiellement l'émission audiovisuelle,
**caractérisé en ce que** les équipements de diffusion communiquent entre eux et partagent les évènements et les flux de données audio/vidéo, chacun des équipements de diffusion comportant un processeur de calculs, une mémoire et au moins une interface (50) de suivi d'un dispositif connecté (30) associé à un utilisateur et **en ce que** le procédé comporte les opérations suivantes :
- détection, par le premier équipement de diffusion, de l'éloignement (120) du dispositif connecté par rapport audit premier équipement de diffusion,
- envoi (130), par le premier équipement de diffusion, d'un message d'éloignement (300) à destination de tous les équipements de diffusion connectés au routeur, ce message d'éloignement comportant une donnée de temporisation de l'émission audiovisuelle,
- vérification, par chacun des équipements de diffusion connectés au routeur, de l'approche du dispositif connecté,
- détection (140), par le deuxième équipement de diffusion, de l'approche du dispositif connecté (30) associé à l'utilisateur,
- diffusion de l'émission audiovisuelle (150), par le deuxième équipement de diffusion, en fonction de la donnée de temporisation transmise par le premier équipement de diffusion dans le message d'éloignement (300), et
- émission, par le deuxième équipement de diffusion, d'un message d'acquittement (160) à destination de tous les équipements de diffusion.

2. Procédé de suivi selon la revendication 1, **caractérisé en ce qu'**il comporte une opération préliminaire de reconnaissance du dispositif connecté (30) associé à l'utilisateur et de transmission, aux équipements de diffusion connectés au routeur, d'un message de suivi (200) contenant des données de suivi dudit dispositif connecté.

3. Procédé de suivi selon la revendication 2, caractérisé en ce chaque message de suivi (200) comporte, dans une trame de message, une adresse MAC relative au dispositif connecté (210), une valeur de seuil proche (220), une valeur de seuil éloigné (230) et un identifiant d'utilisateur (240).

4. Procédé de suivi selon l'une quelconque des revendications 1 à 3, **caractérisé en ce que** chaque message d'éloignement (300) comporte, dans une trame de message, un identifiant (310) de l'équipement de diffusion émettant le message d'éloignement, l'adresse MAC du dispositif connecté (320), une information (330) de relance de l'émission audiovisuelle et la donnée de temporisation (340).

5. Procédé de suivi selon l'une quelconque des revendications 2 à 4, **caractérisé en ce que** l'opération préliminaire de reconnaissance du dispositif connecté comporte au moins une mesure, au moins par le premier équipement de diffusion, d'un indicateur de puissance de signal reçu.

6. Procédé de suivi selon la revendication 5, **caractérisé en ce que** l'opération préliminaire de reconnaissance du dispositif connecté comporte un échantillonnage de l'indicateur de puissance de signal reçu.

7. Procédé de suivi selon l'une quelconque des revendications 2 à 6, **caractérisé en ce que** l'opération préliminaire de reconnaissance du dispositif connecté comporte une sélection du dispositif connecté, par l'utilisateur.

8. Procédé de suivi selon l'une quelconque des revendications 1 à 7, **caractérisé en ce qu'**il comporte, après réception du message d'acquittement, et en l'absence d'un deuxième dispositif connecté détecté à proximité du premier équipement de diffusion, une opération d'arrêt de la diffusion par le premier équipement de diffusion.

9. Procédé de suivi selon l'une quelconque des revendications 1 à 8, **caractérisé en ce que** le dispositif connecté (30) communique avec les équipements de diffusion (21, 22, 23) par un protocole d'échange sans fil Bluetooth.

10. Procédé de suivi selon l'une quelconque des revendications 1 à 9, **caractérisé en ce que**, lorsque le dispositif connecté (30) est détecté à l'approche du deuxième équipement de diffusion, ledit deuxième équipement de diffusion envoie à l'utilisateur une demande d'acceptation de reprise de l'émission audiovisuelle.

11. Équipement de diffusion d'une émission audiovisuelle, **caractérisé en ce qu'**il comporte un processeur de calculs, une mémoire et au moins une interface (50) de suivi d'un dispositif connecté (30) associé à un utilisateur, ledit équipement de diffusion étant apte à détecter un éloignement et une approche du dispositif connecté (30), à envoyer, recevoir et traiter un message d'éloignement (300), et à diffuser l'émission audiovisuelle en tenant compte d'une donnée de temporisation contenue dans le message d'éloignement.

12. Système de diffusion d'une émission audiovisuelle mettant en oeuvre le procédé selon l'une quelconque des revendications 1 à 10, **caractérisé en ce qu'**il comporte :
- au moins un premier et un deuxième équipements de diffusion (21, 22, 23) connectés par l'intermédiaire d'un routeur (24), et
- au moins un dispositif connecté (30), associé à un utilisateur et connecté
aux équipements de diffusion par un protocole d'échange sans fil, chacun des premier et deuxième équipements de diffusion comportant un processeur de calculs, une mémoire et au moins une interface (50) de suivi du dispositif connecté (30).

13. Programme d'ordinateur, **caractérisé en ce qu'**il comprend des instructions qui, lorsqu'elles sont exécutées par un équipement de diffusion d'une émission audiovisuelle, sont propres à mettre en oeuvre le procédé selon l'une quelconque des revendications 1 à 10 pour détecter le dispositif connecté et diffuser l'émission audiovisuelle.

14. Moyen de stockage, **caractérisé en ce qu'**il stocke un programme d'ordinateur comprenant des instructions pour mettre en oeuvre, par un équipement de diffusion d'une émission audiovisuelle, le procédé selon l'une quelconque des revendications 1 à 10 lorsque le programme est exécuté par un processeur dudit équipement.

## Patentansprüche

1. Verfahren zur Verfolgung einer audiovisuellen Sendung zwischen mindestens einem ersten und einem zweiten Ausstrahlungsgerät (21, 22, 23), die mittels eines Routers (24) verbunden und je fähig sind, die audiovisuelle Sendung zumindest teilweise auszustrahlen,
**dadurch gekennzeichnet, dass** die Ausstrahlungsgeräte miteinander kommunizieren und die Ereignisse und die Audio-/Video-Datenflüsse gemeinsam nutzen, wobei jedes der Ausstrahlungsgeräte einen Rechnungsprozessor, einen Speicher und mindestens eine Verfolgungsschnittstelle (50) einer einem Benutzer zugeordneten verbundenen Vorrichtung (30) aufweist, und dass das Verfahren die folgenden Vorgänge aufweist:
- Erkennen (120), durch das erste Ausstrahlungsgerät, der Entfernung der verbundenen Vorrichtung bezüglich des ersten Ausstrahlungsgeräts,
- Senden (130), durch das erste Ausstrahlungsgerät, einer Entfernungsnachricht (300) an alle mit dem Router verbundenen Ausstrahlungsgeräte, wobei diese Entfernungsnachricht einen Verzögerungsdatenwert der audiovisuellen Sendung aufweist,
- ^ Überprüfen, durch jedes der mit dem Router verbundenen Ausstrahlungsgeräte, der Annäherung der verbundenen Vorrichtung,
- Erkennen (140), durch das zweite Ausstrahlungsgerät, der Annäherung der dem Benutzer zugeordneten verbundenen Vorrichtung (30),
- Ausstrahlen (150) der audiovisuellen Sendung durch das zweite Ausstrahlungsgerät abhängig von dem vom ersten Ausstrahlungsgerät in der Entfernungsnachricht (300) übertragenen Verzögerungsdatenwert, und
- Senden (160), durch das zweite Ausstrahlungsgerät, einer Bestätigungsnachricht an alle Ausstrahlungsgeräte.

2. Verfolgungsverfahren nach Anspruch 1, **dadurch gekennzeichnet, dass** es einen einleitenden Vorgang der Erkennung der dem Benutzer zugeordneten verbundenen Vorrichtung (30) und der Übertragung einer Verfolgungsdaten der verbundenen Vorrichtung enthaltenden Verfolgungsnachricht (200) an die mit dem Router verbundenen Ausstrahlungsgeräte aufweist.

3. Verfolgungsverfahren nach Anspruch 2, **dadurch gekennzeichnet, dass** jede Verfolgungsnachricht (200) in einem Nachrichtenrahmen eine MAC-Adresse bezüglich der verbundenen Vorrichtung (210), einen Wert einer nahen Schwelle (220), einen Wert einer entfernten Schwelle (230) und eine Benutzerkennung (240) aufweist.

4. Verfolgungsverfahren nach einem der Ansprüche 1 bis 3, **dadurch gekennzeichnet, dass** jede Entfernungsnachricht (300) in einem Nachrichtenrahmen eine Kennung (310) des die Entfernungsnachricht sendenden Ausstrahlungsgeräts, die MAC-Adresse der verbundenen Vorrichtung (320), eine Information (330) des Neustarts der audiovisuellen Sendung und den Verzögerungsdatenwert (340) aufweist.

5. Verfolgungsverfahren nach einem der Ansprüche 2 bis 4, **dadurch gekennzeichnet, dass** der einleitende Vorgang der Erkennung der verbundenen Vorrichtung mindestens eine Messung, mindestens durch das erste Ausstrahlungsgerät, eines Stärkeindikators eines empfangenen Signals aufweist.

6. Verfolgungsverfahren nach Anspruch 5, **dadurch gekennzeichnet, dass** der einleitende Vorgang der Erkennung der verbundenen Vorrichtung eine Abtastung des Stärkeindikators eines empfangenen Signals aufweist.

7. Verfolgungsverfahren nach einem der Ansprüche 2 bis 6, **dadurch gekennzeichnet, dass** der einleitende Vorgang der Erkennung der verbundenen Vorrichtung eine Auswahl der verbundenen Vorrichtung durch den Benutzer aufweist.

8. Verfolgungsverfahren nach einem der Ansprüche 1 bis 7, **dadurch gekennzeichnet, dass** es nach Empfang der Bestätigungsnachricht und in Abwesenheit einer erkannten zweiten verbundenen Vorrichtung in der Nähe des ersten Ausstrahlungsgeräts einen Stoppvorgang der Ausstrahlung durch das erste Ausstrahlungsgerät aufweist.

9. Verfolgungsverfahren nach einem der Ansprüche 1 bis 8, **dadurch gekennzeichnet, dass** die verbundene Vorrichtung (30) über ein drahtloses Bluetooth-Austauschprotokoll mit den Ausstrahlungsgeräten (21, 22, 23) kommuniziert.

10. Verfolgungsverfahren nach einem der Ansprüche 1 bis 9, **dadurch gekennzeichnet, dass**, wenn die verbundene Vorrichtung (30) bei der Annäherung des zweiten Ausstrahlungsgeräts erkannt wird, das zweite Ausstrahlungsgerät eine Akzeptanzanfrage der Wiederaufnahme der audiovisuellen Sendung an den Benutzer sendet.

11. Ausstrahlungsgerät einer audiovisuellen Sendung, **dadurch gekennzeichnet, dass** es einen Rechnungsprozessor, einen Speicher und mindestens eine Verfolgungsschnittstelle (50) einer einem Benutzer zugeordneten verbundenen Vorrichtung (30) aufweist, wobei das Ausstrahlungsgerät fähig ist, eine Entfernung und eine Annäherung der verbundenen Vorrichtung (30) zu erkennen, eine Entfernungsnachricht (300) zu schicken, zu empfangen und zu verarbeiten, und die audiovisuelle Sendung auszustrahlen, unter Berücksichtigung eines in der Entfernungsnachricht enthaltenen Verzögerungsdatenwerts.

12. System zur Ausstrahlung einer audiovisuellen Sendung, das das Verfahren nach einem der Ansprüche 1 bis 10 durchführt, **dadurch gekennzeichnet, dass** es aufweist:
- mindestens ein erstes und ein zweites Ausstrahlungsgerät (21, 22, 23), die mittels eines Routers (24) verbunden sind, und
- mindestens eine verbundene Vorrichtung (30), die einem Benutzer zugeordnet und über ein drahtloses Austauschprotokoll mit den Ausstrahlungsgeräten verbunden ist,
wobei jedes der ersten und zweiten Ausstrahlungsgeräte einen Rechnungsprozessor, einen Speicher und mindestens eine Verfolgungsschnittstelle (50) der verbundenen Vorrichtung (30) aufweist.

13. Computerprogramm, **dadurch gekennzeichnet, dass** es Anweisungen enthält, die, wenn sie von einem Ausstrahlungsgerät einer audiovisuellen Sendung ausgeführt werden, geeignet sind, das Verfahren nach einem der Ansprüche 1 bis 10 durchzuführen, um die verbundene Vorrichtung zu erkennen und die audiovisuelle Sendung auszustrahlen.

14. Speichereinrichtung, **dadurch gekennzeichnet, dass** sie ein Computerprogramm speichert, das Anweisungen enthält, um das Verfahren nach einem der Ansprüche 1 bis 10 durch ein Ausstrahlungsgerät einer audiovisuellen Sendung durchzuführen, wenn das Programm von einem Prozessor des Geräts ausgeführt wird.

## Claims

1. Method for following an audiovisual programme between at least a first and a second broadcasting apparatus (21, 22, 23) which are connected via a router (24) and able to at least partially broadcast the audiovisual programme,
**characterized in that** the broadcasting apparatuses communicate with one another and share audio/video data streams and events, each of the broadcasting apparatuses comprising a computing processor, a memory and at least one interface (50) for following a connected device (30) associated with a user and **in that** the method comprises the following operations:
- the first broadcasting apparatus detecting (120) that the connected device is receding from said first broadcasting apparatus,
- the first broadcasting apparatus sending (130) a recession message (300) to all the broadcasting apparatuses connected to the router, this recession message comprising a datum for delaying the audiovisual programme,
- each of the broadcasting apparatuses connected to the router checking whether the connected device is approaching,
- the second broadcasting apparatus detecting (140) that the connected device (30) associated with the user is approaching,
- the second broadcasting apparatus broadcasting (150) the audiovisual programme in accordance with the delay datum transmitted by the first broadcasting apparatus in the recession message (300), and
- the second broadcasting apparatus transmitting (160) an acknowledgement message to all the broadcasting apparatuses.

2. Following method according to Claim 1, **characterized in that** it comprises a preliminary operation of recognizing the connected device (30) associated with the user and of transmitting, to the broadcasting apparatuses connected to the router, a following message (200) containing data for following said connected device.

3. Following method according to Claim 2, **characterized in that** each following message (200) comprises, in a message frame, a MAC address (210) relating to the connected device, a near threshold value (220), a far threshold value (230) and a user identifier (240).

4. Following method according to any one of Claims 1 to 3, **characterized in that** each recession message (300) comprises, in a message frame, an identifier (310) of the broadcasting apparatus transmitting the recession message, the MAC address (320) of the connected device, information (330) for relaunching the audiovisual programme and the delay datum (340).

5. Following method according to any one of Claims 2 to 4, **characterized in that** the preliminary operation of recognizing the connected device comprises at least the first broadcasting apparatus measuring a received signal strength indicator at least once.

6. Following method according to Claim 5, **characterized in that** the preliminary operation of recognizing the connected device comprises sampling the received signal strength indicator.

7. Following method according to any one of Claims 2 to 6, **characterized in that** the preliminary operation of recognizing the connected device comprises the user selecting the connected device.

8. Following method according to any one of Claims 1 to 7, **characterized in that** it comprises, after the acknowledgement message is received, and in the absence of a second connected device detected near to the first broadcasting apparatus, an operation of the first broadcasting apparatus stopping broadcasting.

9. Following method according to any one of Claims 1 to 8, **characterized in that** the connected device (30) communicates with the broadcasting apparatuses (21, 22, 23) by a Bluetooth wireless exchange protocol.

10. Following method according to any one of Claims 1 to 9, **characterized in that**, when the connected device (30) is detected on the approach to the second broadcasting apparatus, said second broadcasting apparatus sends a request to the user to accept resumption of the audiovisual programme.

11. Apparatus for broadcasting an audiovisual programme, **characterized in that** it comprises a computing processor, a memory and at least one interface (50) for following a connected device (30) associated with a user, said broadcasting apparatus being able to detect that the connected device (30) is receding and approaching, to send, receive and process a recession message (300) and to broadcast the audiovisual programme while taking account of a delay datum contained in the recession message.

12. System for broadcasting an audiovisual programme implementing the method according to any one of Claims 1 to 10, **characterized in that** it comprises:
- at least a first and a second broadcasting apparatus (21, 22, 23) which are connected via a router (24), and
- at least one connected device (30), associated with a user and connected to the broadcasting apparatuses by a wireless exchange protocol,
both the first and second broadcasting apparatus comprising a computing processor, a memory and at least one interface (50) for following the connected device (30).

13. Computer program, **characterized in that** it comprises instructions which, when they are executed by an apparatus for broadcasting an audiovisual programme, are suitable for implementing the method according to any one of Claims 1 to 10 in order to detect the connected device and broadcast the audiovisual programme.

14. Storage means, **characterized in that** it stores a computer program comprising instructions for an apparatus for broadcasting an audiovisual programme to implement the method according to any one of Claims 1 to 10 when the program is executed by a processor of said apparatus.
